(19) Europäisches Patentamt
European Patent Office
Office européen des brevets

(11) **EP 3 956 230 B1**

(12) **FASCICULE DE BREVET EUROPEEN**

(45) Date de publication et mention de la délivrance du brevet:
**19.10.2022 Bulletin 2022/42**

(21) Numéro de dépôt: **21732445.8**

(22) Date de dépôt: **10.05.2021**

(51) Classification Internationale des Brevets (IPC):
**B64G 1/24** (2006.01)      **B64G 1/26** (2006.01)
**B64G 1/28** (2006.01)

(52) Classification Coopérative des Brevets (CPC):
**B64G 1/26; B64G 1/242; B64G 1/244; B64G 1/283**

(86) Numéro de dépôt international:
**PCT/FR2021/050796**

(87) Numéro de publication internationale:
**WO 2021/229168 (18.11.2021 Gazette 2021/46)**

(54) **PROCÉDÉ DE CONTRÔLE D'ORBITE ET DE DÉSATURATION D'UN SATELLITE AU MOYEN D'UN UNIQUE BRAS ARTICULÉ PORTANT UNE UNITÉ DE PROPULSION**

VERFAHREN ZUR UMLAUFBAHNSTEUERUNG UND -DESATURATION EINES SATELLITEN MITTELS EINZELGELENKARM, DER EINE ANTRIEBSEINHEIT TRÄGT

METHOD FOR ORBIT CONTROL AND DESATURATION OF A SATELLITE BY MEANS OF A SINGLE ARTICULATED ARM CARRYING A PROPULSION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2020 FR 2004654**

(43) Date de publication de la demande:
**23.02.2022 Bulletin 2022/08**

(73) Titulaire: **Airbus Defence and Space SAS**
**31402 Toulouse Cedex 4 (FR)**

(72) Inventeur: **LAURENS, Philippe**
**31402 TOULOUSE Cedex 4 (FR)**

(74) Mandataire: **Plasseraud IP**
**66, rue de la Chaussée d'Antin**
**75440 Paris Cedex 09 (FR)**

(56) Documents cités:
**EP-A1- 0 818 721          WO-A1-2015/193499**
**US-A- 6 015 116           US-A1- 2013 292 516**
**US-A1- 2018 029 727**

**Description**

**Domaine technique**

La présente invention appartient au domaine du contrôle d'orbite et d'attitude des satellites. L'invention trouve une application particulièrement avantageuse, bien que nullement limitative, dans le cas de satellites de télécommunications en orbite géostationnaire (« Geostationary Orbit » ou GEO) équipés de moyens de propulsion électriques.

**Etat de la technique**

De manière connue, un satellite en orbite terrestre est soumis à de nombreuses perturbations. Ces perturbations tendent, d'une part, à déplacer le satellite par rapport à une position de consigne sur son orbite et, d'autre part, à modifier l'attitude dudit satellite par rapport à une attitude de consigne.

Afin de maintenir le satellite sensiblement dans la position de consigne et dans l'attitude de consigne, il est nécessaire d'effectuer un contrôle d'orbite et un contrôle d'attitude dudit satellite.

Le contrôle d'orbite consiste à limiter les variations des paramètres orbitaux généralement exprimés en termes d'inclinaison, de longitude et d'excentricité de l'orbite du satellite. Dans le cas d'un satellite en orbite GEO, tel qu'un satellite de télécommunications, le contrôle d'orbite revient à contrôler la position du satellite par rapport à la Terre, et est connu également sous le nom de maintien à poste du satellite (« station keeping » ou « S/K » dans la littérature anglo-saxonne).

Le contrôle d'orbite d'un satellite en orbite GEO est généralement réalisé au moyen de plusieurs manœuvres de poussée au cours desquelles des propulseurs du satellite sont activés. Le contrôle d'orbite du satellite est effectué en ajustant les forces de poussée formées par lesdits propulseurs au cours des différentes manœuvres de poussée, mais également en ajustant les durées d'activation desdits propulseurs.

Généralement, les besoins de contrôle d'orbite les plus importants concernent le contrôle de l'inclinaison de l'orbite du satellite, qui est réalisé en effectuant des manœuvres de poussée, dites manœuvres Nord/Sud (N/S), de part et d'autre de la Terre, respectivement au voisinage du nœud ascendant et du nœud descendant de l'orbite du satellite. Au voisinage du nœud ascendant, la manœuvre de poussée forme une force de poussée qui tend à ramener le satellite vers l'hémisphère Sud. Au voisinage du nœud descendant, la manœuvre de poussée forme une force de poussée qui tend à ramener le satellite vers l'hémisphère Nord.

Le contrôle d'attitude consiste à contrôler l'orientation du satellite, en particulier par rapport à la Terre. Lorsque le satellite est à poste en orbite, les perturbations appliquent des moments (« torques » dans la littérature anglo-saxonne) qui tendent à faire tourner ledit satellite autour de son centre de masse et donc à modifier l'attitude dudit satellite par rapport à l'attitude de consigne (attitude de mission). Il est à noter que les manœuvres de poussée du contrôle d'orbite peuvent également appliquer des moments perturbateurs lorsque les forces de poussée ne sont pas parfaitement alignées avec le centre de masse du satellite.

Afin de maintenir le satellite dans l'attitude de consigne, celui-ci est généralement équipé d'un dispositif de stockage de moment cinétique (« angular momentum » dans la littérature anglo-saxonne). Le dispositif de stockage de moment cinétique comporte par exemple au moins trois roues de réaction, d'axes de rotation linéairement indépendants. En contrôlant la vitesse de rotation desdites roues de réaction, il est possible de créer des moments qui s'opposent aux moments perturbateurs.

Du fait de l'effet cumulatif des moments perturbateurs, les vitesses de rotation desdites roues de réaction, et donc le moment cinétique stocké, tendent à augmenter progressivement. Il est par conséquent nécessaire de désaturer régulièrement le dispositif de stockage de moment cinétique afin de limiter l'excursion en vitesse desdites roues de réaction. Par « désaturer », on entend appliquer des moments externes sur le satellite qui, lorsqu'ils sont repris par le dispositif de stockage de moment cinétique, permettent de diminuer la quantité de moment cinétique stocké. Une telle désaturation du dispositif de stockage de moment cinétique est connue sous le nom de « angular momentum unloading » dans la littérature anglo-saxonne.

La désaturation du dispositif de stockage de moment cinétique met généralement en œuvre des propulseurs du satellite, qui sont activés au cours de manœuvres de poussée de contrôle d'attitude.

Il est connu du document EP 3157815 A1 une solution permettant de limiter à la fois le nombre de propulseurs embarqués par le satellite et le nombre de manœuvres de poussée, permettant de réaliser à la fois le contrôle d'orbite (inclinaison, longitude, excentricité) et la désaturation 3-axes du dispositif de stockage de moment cinétique du satellite.

Dans le document EP 3157815 A1, le satellite est équipé de deux bras articulés comportant chacun au moins trois degrés de liberté, portant des propulseurs respectifs et étant agencés de part et d'autre d'un corps du satellite, un bras articulé étant agencé du côté Nord du satellite tandis que l'autre bras articulé est agencé du côté Sud du satellite. Dans le document EP 3157815 A1, un plan de manœuvre est utilisé, comportant au moins deux manœuvres de poussée exécutées au voisinage respectivement du nœud ascendant et du nœud descendant de l'orbite du satellite. Les forces de poussée de ces deux manœuvres de poussée sont déterminées pour contrôler l'inclinaison et la longitude de l'orbite du satellite, et pour former des moments de désaturation du dispositif de stockage. En outre, les forces de poussée sont délibérément non parallèles en repère inertiel, afin de permettre de réaliser sur ces deux manœuvres de poussée une désaturation 3-axes du dispositif de stockage. Ces deux bras articulés, et les propulseurs qu'ils portent, permettent également de contrôler l'excentricité de l'orbite du satellite, y compris au cours des deux manœuvres de poussée susmentionnées.

Ainsi, la solution proposée par le document EP 3157815 A1 permet, au moyen de deux bras articulés portant des propulseurs, de contrôler tous les paramètres orbitaux et d'effectuer une désaturation 3-axes du dispositif de stockage, tout en limitant le nombre de manœuvres de poussée.

La question qui se pose est celle de la robustesse d'un tel satellite en cas de panne d'un des deux bras articulés. En effet, la panne d'un bras articulé ne peut pas être totalement exclue, notamment dans la deuxième moitié de la durée de la mission du satellite. Il est donc tentant d'équiper le satellite de propulseurs et/ou de bras articulés redondants pour pallier une telle panne, ce qui augmente la complexité et le coût de fabrication du satellite. Le document US 2013/0292516 A1 mentionne la possibilité d'utiliser un seul bras articulé en cas de panne sans préciser comment un tel contrôle pourrait être réalisé.

**Exposé de l'invention**

La présente invention a pour objectif de remédier à tout ou partie des limitations des solutions de l'art antérieur, notamment celles exposées ci-avant, en proposant une solution qui permette de continuer à contrôler l'orbite d'un satellite et à désaturer un dispositif de stockage de moment cinétique dudit satellite même au moyen d'un seul bras articulé.

A cet effet, et selon un premier aspect, il est proposé un procédé de contrôle d'orbite d'un satellite en orbite terrestre et de désaturation d'un dispositif de stockage de moment cinétique dudit satellite, ledit satellite comportant un bras articulé comportant au moins trois degrés de liberté, ledit bras articulé comportant une première extrémité liée à un corps du satellite et une seconde extrémité portant une unité de propulsion, ledit bras articulé étant adapté à déplacer ladite seconde extrémité dans un volume de débattement inclus dans un demi-espace délimité par un plan d'orbite du satellite lorsque ledit satellite est dans une attitude de mission. Le procédé de contrôle comporte un mode de contrôle dit « mono-bras » en ce qu'il utilise uniquement l'unité de propulsion portée par le bras articulé pour contrôler l'orbite du satellite et pour désaturer le dispositif de stockage, ledit mode de contrôle mono-bras utilisant un plan de manœuvre comportant uniquement des manœuvres de poussée à exécuter lorsque le satellite est situé dans une plage angulaire d'au plus 180° centrée sur un nœud prédéterminé de l'orbite du satellite, dit nœud cible. De préférence, ledit plan de manœuvre comporte au moins une manœuvre de poussée dite « amont » à exécuter en amont dudit nœud cible et une manœuvre de poussée dite « aval » à exécuter en aval dudit nœud cible.

Grâce à ses au moins trois degrés de liberté, le bras articulé permet de modifier en repère satellite à la fois la direction de poussée et le point d'application d'une force de poussée formée par l'unité de propulsion.

Les forces de poussée que peut réaliser l'unité de propulsion portée par le bras articulé sont limitées par, notamment, le volume de débattement du bras articulé. En particulier, lorsque le satellite se trouve dans son attitude de mission, un tel bras articulé ne peut appliquer des forces de poussée que dans un demi-espace délimité par le plan d'orbite.

Par exemple, un bras articulé positionné du côté Nord d'un corps du satellite est en principe conçu pour former des forces de poussée dirigées en partie vers le Nord, afin de pousser le satellite vers le Sud. L'unité de propulsion d'un tel bras articulé positionné au Nord est typiquement activée au voisinage du nœud ascendant de l'orbite du satellite. A contrario, un bras articulé positionné au Sud est en principe conçu pour former des forces de poussée dirigées en partie vers le Sud, afin de pousser le satellite vers le Nord. L'unité de propulsion d'un tel bras articulé positionné au Sud est typiquement activée au voisinage du nœud descendant de l'orbite du satellite.

Les inventeurs ont constaté qu'il était possible de contrôler l'orbite du satellite et de désaturer le dispositif de stockage de moment cinétique du satellite au moyen d'un seul bras articulé portant une unité de propulsion, en utilisant un mode de contrôle mono-bras.

Contrairement à l'art antérieur, qui distribue les manœuvres de poussée de manière sensiblement symétrique par rapport à la Terre, au voisinage des nœuds ascendant et descendant, les manœuvres de poussée du mode de contrôle mono-bras sont toutes exécutées d'un seul côté de la Terre, du côté d'un nœud prédéterminé de l'orbite, dit nœud cible.

En pratique le nœud cible est déterminé par le volume de débattement du bras articulé. En effet, si le volume de débattement est situé dans le demi-espace Nord (bras articulé positionné du côté Nord), alors le nœud cible est le nœud ascendant de l'orbite. A contrario, si le volume de débattement est situé dans le demi-espace Sud (bras articulé positionné du côté Sud), alors le nœud cible est le nœud descendant de l'orbite.

En effectuant ainsi toutes les manœuvres de poussée dans une plage angulaire d'au plus 180° centrée sur le nœud cible (nœud ascendant ou nœud descendant, suivant la position du volume de débattement par rapport au plan d'orbite), il est possible d'effectuer toutes les opérations de contrôle d'orbite et de désaturation du dispositif de stockage avec un seul bras articulé. Pour faciliter la désaturation 3-axes du dispositif de stockage, notamment, le plan de manœuvre comporte au moins deux manœuvres de poussée exécutées à des positions angulaires différentes du satellite sur son orbite. Avantageusement, le plan de manœuvre comporte une manœuvre de poussée à exécuter en amont dudit nœud-dcible, dite « manœuvre de poussée amont », et une manœuvre de poussée à exécuter en aval dudit nœud cible, dite « manœuvre de poussée aval ». De telles dispositions permettent en outre d'avoir un contrôle plus efficace des différents paramètres orbitaux de l'orbite du satellite, notamment d'un point de vue consommation en ergols.

Ainsi, un tel mode de contrôle mono-bras peut être mis en œuvre lors de la détection d'une panne d'un bras articulé d'un satellite comportant initialement plusieurs bras articulés. Un tel mode de contrôle mono-bras peut également être mis en œuvre en tant que mode de contrôle par défaut dans le cas d'un satellite équipé initialement d'un seul bras articulé.

Dans des modes particuliers de mise en œuvre, le procédé de contrôle peut comporter en outre l'une ou plusieurs des caractéristiques suivantes, prises isolément ou selon toutes les combinaisons techniquement possibles.

Dans des modes particuliers de mise en œuvre, la manœuvre de poussée amont est exécutée au moins en partie lorsque le satellite est situé dans une plage angulaire comprise entre 40° et 60° en amont du nœud cible, et la manœuvre de poussée aval est exécutée au moins en partie lorsque le satellite est situé dans une plage angulaire comprise entre 40° et 60° en aval du nœud cible.

Lorsqu'un seul bras articulé est utilisé pour contrôler l'orbite du satellite et pour désaturer le dispositif de stockage, plusieurs paramètres peuvent être pris en compte.

D'une part, le déplacement du bras articulé doit être limité au maximum afin de réduire les sollicitions des articulations du bras articulé et en augmenter la durée de vie, ce qui conduirait plutôt à éloigner les manœuvres de poussée successives le long de l'orbite du satellite. En effet, des forces de poussée non parallèles en repère inertiel, propices à une désaturation 3-axes, peuvent alors être formées sans avoir à déplacer fortement le bras articulé. En outre, on dispose alors de plus de temps pour réaliser les déplacements nécessaires du bras articulé.

D'autre part, la consommation en ergols de l'unité de propulsion doit être réduite pour augmenter la durée de vie du satellite, ce qui conduirait plutôt à rapprocher les manœuvres de poussée du nœud cible. En effet, plus les manœuvres de poussée sont exécutées à proximité du nœud cible, plus elles sont efficaces. Toutefois, les déplacements du bras articulé seraient alors plus importants et devraient être réalisés plus rapidement, du moins si la manœuvre de poussée aval est exécutée immédiatement après la manœuvre de poussée amont, au cours de la même demi-période orbitale.

Exécuter une partie au moins de la manœuvre de poussée amont lorsque le satellite est situé dans une plage angulaire comprise entre 40° et 60° en amont du nœud cible, et exécuter une partie au moins de la manœuvre de poussée aval lorsque le satellite est situé dans une plage angulaire comprise entre 40° et 60° en aval du nœud cible constitue alors un bon compromis d'un point de vue amplitude des déplacements du bras articulé / consommation en ergols.

Dans des modes particuliers de mise en œuvre, la manœuvre de poussée amont est entièrement exécutée lorsque le satellite est situé dans la plage angulaire comprise entre 40° et 60° en amont du nœud cible, et la manœuvre de poussée aval est entièrement exécutée lorsque le satellite est situé dans la plage angulaire comprise entre 40° et 60° en aval du nœud cible.

Dans des modes particuliers de mise en œuvre, chaque manœuvre de poussée du plan de manœuvre est exécutée au moins en partie lorsque le satellite se trouve dans la plage angulaire comprise entre 40° et 60° en amont du nœud cible ou dans la plage angulaire comprise entre 40° et 60° en aval du nœud cible.

Dans des modes particuliers de mise en œuvre, le plan de manœuvre comporte au moins une manœuvre de poussée par période orbitale.

Dans des modes particuliers de mise en œuvre, la manœuvre de poussée amont et la manœuvre de poussée aval sont exécutées au cours d'une même demi-période orbitale.

Dans des modes particuliers de mise en œuvre, la manœuvre de poussée amont et la manœuvre de poussée aval ont des forces de poussée de l'unité de propulsion de directions de poussée respectives non parallèles en repère inertiel, lesdites forces de poussée étant déterminées pour former des moments dans des plans respectifs non parallèles en repère inertiel et réaliser une désaturation 3-axes dudit dispositif de stockage de moment cinétique.

Dans des modes particuliers de mise en œuvre, la manœuvre de poussée amont et la manœuvre de poussée aval ont des forces de poussée de l'unité de propulsion déterminées pour contrôler au moins l'inclinaison de l'orbite du satellite.

Dans des modes particuliers de mise en œuvre, la manœuvre de poussée amont et la manœuvre de poussée aval ont des forces de poussée de l'unité de propulsion déterminées pour contrôler en outre au moins un paramètre orbital parmi la longitude et l'excentricité de l'orbite du satellite.

Dans des modes particuliers de mise en œuvre, le bras articulé comportant au moins trois articulations comportant chacune au moins un degré de liberté en rotation autour d'un axe de rotation, une première articulation et une seconde articulation étant séparées par une première liaison et étant d'axes de rotation respectifs non parallèles, la seconde articulation et une troisième articulation étant séparées par une seconde liaison et étant d'axes de rotation respectifs non parallèles, le bras articulé est contrôlé pour réaliser une manœuvre de poussée en commandant les articulations du bras articulé.

Dans des modes particuliers de mise en œuvre, le satellite comportant deux bras articulés comportant chacun au moins trois degrés de liberté et portant chacun une unité de propulsion, lesdits deux bras articulés étant adaptés à déplacer les unités de propulsion dans des volumes de débattement respectifs inclus dans des demi-espaces respectifs opposés par rapport au plan d'orbite du satellite lorsque ledit satellite est dans l'attitude de mission, ledit procédé comporte en outre un mode de contrôle dit « à deux bras » en ce qu'il utilise les deux bras articulés :

- le mode de contrôle à deux bras est utilisé tant qu'un critère de changement de mode de contrôle n'est pas vérifié,
- le mode de contrôle mono-bras est utilisé lorsque le critère de changement de mode de contrôle est vérifié.

Dans des modes particuliers de mise en œuvre, le critère de changement de mode de contrôle est vérifié lorsqu'une panne d'un bras articulé est détectée. Par « panne d'un bras articulé », on entend une panne du bras articulé en tant que tel et/ou une panne de l'unité de propulsion portée par ce bras articulé.

Selon un second aspect, il est proposé un satellite destiné à être placé en orbite terrestre, comportant un bras articulé comportant au moins trois degrés de liberté, ledit bras articulé comportant une première extrémité liée à un corps du satellite et une seconde extrémité portant une unité de propulsion, ledit bras articulé étant adapté à déplacer ladite seconde extrémité dans un volume de débattement inclus dans un demi-espace délimité par un plan d'orbite du satellite lorsque ledit satellite est dans une attitude de mission. En outre, le satellite comporte un dispositif de commande configuré pour commander le bras articulé et l'unité de propulsion selon un plan de manoeuvre d'un mode de contrôle mono-bras d'un procédé de contrôle d'orbite et de désaturation selon l'un quelconque des modes de mise en œuvre de l'invention.

Selon un troisième aspect, il est proposé un système satellitaire selon la revendication 14.

Dans des modes particuliers de réalisation, le satellite comporte uniquement des propulseurs électriques.

Dans des modes particuliers de réalisation, le satellite est en orbite géostationnaire.

## Présentation des figures

L'invention sera mieux comprise à la lecture de la description suivante, donnée à titre d'exemple nullement limitatif, et faite en se référant aux figures qui représentent :

- Figure 1 : une représentation schématique d'un satellite en orbite autour de la Terre,
- Figure 2 : une représentation schématique d'un exemple de réalisation d'un satellite,
- Figure 3 : un diagramme illustrant les principales étapes d'un mode de mise en œuvre d'un procédé de contrôle d'orbite et de désaturation,
- Figure 4 : une représentation schématique d'un premier exemple de plan de manœuvre,
- Figure 5 : une représentation schématique d'un second exemple de plan de manœuvre,
- Figure 6 : une représentation schématique d'un mode préféré de mise en œuvre d'un plan de manœuvre.

Dans ces figures, des références identiques d'une figure à une autre désignent des éléments identiques ou analogues. Pour des raisons de clarté, les éléments représentés ne sont pas à l'échelle, sauf mention contraire.

## Description des modes de réalisation

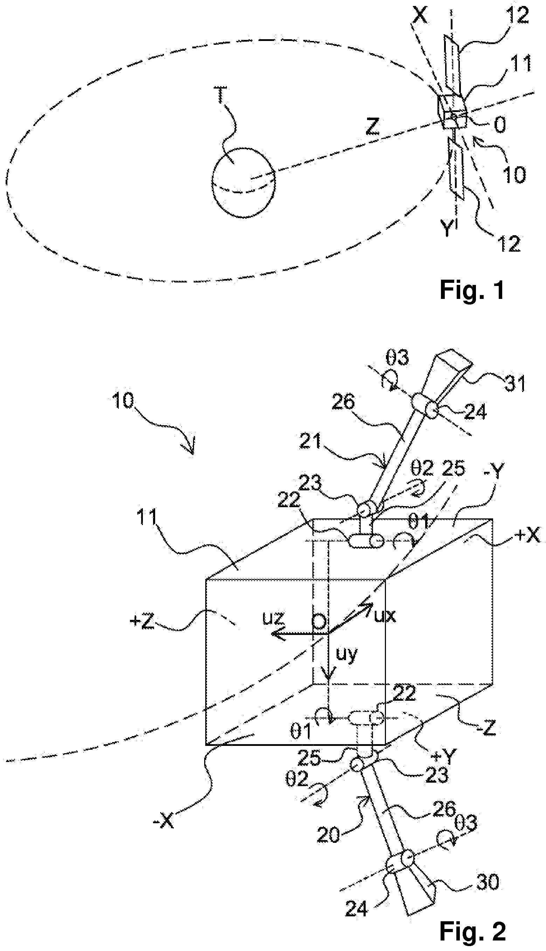

La figure 1 représente schématiquement un satellite 10 en orbite autour de la Terre T.

Dans la suite de la description, on se place de manière non limitative dans le cas d'un satellite 10 en orbite GEO. Rien n'exclut cependant, suivant d'autres exemples, de considérer d'autres types d'orbites terrestres, par exemple des orbites géosynchrones, des orbites moyennes (« Médium Earth Orbit » ou MEO), des orbites basses (« Low Earth Orbit » ou LEO), etc.

Pour les besoins de la description, on associe au satellite 10 un repère satellite centré sur un centre de masse O du satellite 10 et comportant trois axes X, Y, Z. Plus particulièrement, l'axe X est parallèle à un vecteur vitesse du satellite 10 en repère inertiel, l'axe Z est dirigé vers le centre de la Terre T, et l'axe Y est orthogonal aux axes X et Z. On associe à chacun des axes X, Y et Z du repère satellite des vecteurs unitaires respectivement ux, uy et uz. Le vecteur unitaire ux correspond au vecteur vitesse normalisé par la norme dudit vecteur vitesse, le vecteur unitaire uz est orienté du centre de masse O du satellite 10 vers le centre de la Terre T, et le vecteur unitaire uy est orienté de telle sorte que l'ensemble (ux, uy, uz) constitue une base orthonormée directe du repère satellite.

Tel qu'illustré par la figure 1, le satellite 10 comporte par exemple un corps 11, et deux générateurs solaires 12 de part et d'autre du corps 11. Les deux générateurs solaires 12 sont par exemple montés mobiles en rotation par rapport au corps 11 du satellite 10, autour d'un même axe de rotation.

Dans la suite de la description, on se place de manière non limitative dans le cas où le corps 11 du satellite 10 est sensiblement en forme de parallélépipède rectangle. Le corps 11 comporte ainsi six faces deux à deux parallèles, et les deux générateurs solaires 12 sont agencés respectivement sur deux faces opposées dudit corps 11, l'axe de rotation desdits deux générateurs solaires 12 étant sensiblement orthogonal auxdites deux faces opposées du corps 11 du satellite 10.

Dans la suite de la description, on se place dans le cas où l'attitude du satellite 10 est contrôlée, pour les besoins de la mission dudit satellite 10, de sorte à être placé dans une attitude de consigne, dite « attitude de mission ». Par exemple, l'attitude de mission est telle que :

- une face du corps 11 du satellite 10, désignée par «face +Z », portant par exemple un instrument d'une charge utile dudit satellite 10, est dirigée vers la Terre et est sensiblement orthogonale à l'axe Z ; la face opposée à la face +Z, agencée alors du côté opposé à la Terre, est désignée par « face -Z » ;
- les deux faces opposées du corps 11 du satellite 10 sur lesquelles sont agencés les deux générateurs solaires 12, désignées par respectivement « face +Y » (par rapport au centre de masse O : du côté pointé par le vecteur unitaire uy) et « face -Y », sont sensiblement orthogonales à l'axe Y ;
- les deux dernières faces opposées du corps 11 du satellite 10, désignées par respectivement « face +X » (par rapport au centre de masse O : du côté pointé par le vecteur unitaire ux) et « face -X », sont sensiblement orthogonales à l'axe X.

En outre, le satellite 10 étant dans l'exemple considéré en orbite GEO, le plan d'orbite du satellite 10, qui correspond au plan équatorial, est confondu avec le plan (X, Z) lorsque ledit satellite 10 est dans son attitude de mission. La face -Y se trouve du côté de l'hémisphère Nord et est également désignée par « face Nord », et la face +Y se trouve du côté de l'hémisphère Sud et est également désignée par « face Sud ».

Le satellite 10 comporte également un ensemble d'actionneurs adaptés à contrôler l'orbite et l'attitude dudit satellite 10, ainsi qu'un dispositif de commande (non représenté sur les figures) desdits actionneurs, également embarqué dans ledit satellite 10.

Pour les besoins du contrôle d'attitude, le satellite 10 comporte en particulier un dispositif de stockage de moment cinétique (non représenté sur les figures) adapté à stocker un moment cinétique d'axe quelconque, c'est-à-dire ayant une capacité de stockage de moment cinétique suivant trois axes linéairement indépendants. Le dispositif de stockage de moment cinétique comporte un ensemble d'actionneurs inertiels tels que des roues de réaction et/ou des actionneurs gyroscopiques. Par exemple, le dispositif de stockage de moment cinétique comporte au moins trois roues de réaction d'axes de rotation respectifs linéairement indépendants.

Tel qu'indiqué précédemment, le contrôle d'orbite consiste à contrôler au moins un paramètre orbital parmi l'inclinaison, la longitude et l'excentricité de l'orbite du satellite 10. Dans le cas d'un satellite 10 en orbite GEO, il est connu que les besoins en termes de contrôle d'orbite, par exemple exprimés en termes de variation de vitesse requise par an (m/s/an), sont principalement imposés par le contrôle de l'inclinaison de l'orbite du satellite 10 (contrôle Nord/Sud ou N/S). L'ordre de grandeur de la variation de vitesse requise par an pour le contrôle N/S, suivant l'axe Y, est ainsi de 50 m/s/an, tandis qu'il est de 2-4 m/s/an pour le contrôle de la longitude de l'orbite (contrôle Est/Ouest ou E/O), suivant l'axe X.

Dans la présente invention, le satellite 10 comporte, pour les besoins du contrôle d'orbite et de désaturation du dispositif de stockage de moment cinétique, au moins un bras articulé comportant au moins trois degrés de liberté, portant une unité de propulsion et adapté à déplacer ladite unité de propulsion dans le repère satellite.

L'unité de propulsion comporte au moins un propulseur. Dans des modes préférés de réalisation, l'unité de propulsion comporte au moins deux propulseurs, afin par exemple de pallier une défaillance d'un des propulseurs ou de répartir leur utilisation en alternance sur la durée de la mission.

La figure 2 représente schématiquement un mode particulier de réalisation d'un satellite 10 comportant deux bras articulés 20, 21, Chaque bras articulé 20, 21 comporte une première extrémité liée au corps 11 du satellite 10, et une seconde extrémité portant une unité de propulsion 30, 31.

Dans la suite de la description, on se place de manière non limitative dans le cas où les unités de propulsion 30, 31 comportent uniquement des propulseurs électriques (électrothermique, électrostatique, plasma, etc.). Rien n'exclut cependant, suivant d'autres exemples, que l'une ou les deux unités de propulsion 30, 31 comportent des propulseurs chimiques (gaz froid, ergols liquides, etc.).

De manière générale, chacun des deux bras articulés 20, 21 comporte au moins trois degrés de liberté, et lesdits deux bras articulés 20, 21 sont adaptés à déplacer les unités de propulsion 30, 31 dans des volumes de débattement respectifs différents inclus dans des demi-espaces respectifs opposés par rapport au plan d'orbite du satellite 10. Tel qu'indiqué ci-dessus, le plan d'orbite, qui correspond au plan équatorial, correspond au plan (X, Z) lorsque le satellite 10 se trouve dans l'attitude de mission. Les volumes de débattement respectifs des bras articulés 20 et 21 sont inclus :

- dans le demi-espace délimité par le plan (X, Z) du côté de la face Sud (+Y) pour le bras articulé 20,
- dans le demi-espace délimité par le plan (X, Z) du côté de la face Nord (-Y) pour le bras articulé 21.

De manière générale, dans toute la présente demande, une force de poussée est définie par un vecteur de poussée et un point d'application de ladite force de poussée par rapport au centre de masse O du satellite 10. Le vecteur de poussée est lui-même défini par une norme de poussée et par une direction de poussée de norme unitaire, qui correspond au vecteur de poussée normalisé par ladite norme de poussée. On comprend donc que les bras articulés 20, 21 permettent de modifier en repère satellite à la fois les directions de poussée et les points d'application des forces de poussée formées par les unités de propulsion 30, 31.

Dans l'exemple illustré par la figure 2, la première extrémité du bras articulé 20 se trouve sur la face Sud, tandis que la première extrémité du bras articulé 21 se trouve sur la face Nord du corps 11 du satellite 10. Dans cet exemple, les premières extrémités des bras articulés 20, 21 sont liées au corps 11 du satellite 10 en des points respectifs qui sont décalés vers la face -Z par rapport aux projections orthogonales du centre de masse théorique sur les faces Sud et Nord. Une telle configuration des bras articulés 20, 21, liés au corps 11 du satellite 10 en des points décalés vers la face -Z par rapport aux projections orthogonales du centre de masse théorique, permet de faciliter le contrôle de l'excentricité de l'orbite du satellite 10. En effet, la force de poussée de l'unité de propulsion 30 (respectivement unité de propulsion 31), lorsqu'elle est appliquée en un point d'application tel qu'aucun moment n'est formé, comporte alors une composante non nulle suivant l'axe Z.

D'autres positions sont cependant possibles pour les premières extrémités des bras articulés 20, 21, dès lors que les volumes de débattement respectifs desdits bras articulés 20, 21 se trouvent dans des demi-espaces respectifs opposés par rapport au plan (X, Z). Suivant un autre exemple non limitatif, les premières extrémités des bras articulés 20, 21 peuvent être positionnées toutes deux sur la face -Z du satellite, à proximité de la face Sud pour le bras articulé 20 et à proximité de la face Nord pour le bras articulé 21.

Dans l'exemple illustré par la figure 2, chaque bras articulé 20, 21 comporte trois articulations 22, 23, 24, chaque articulation comportant au moins un degré de liberté en rotation autour d'un axe de rotation. Les articulations 22 et 23 sont reliées entre elles et séparées par une liaison 25, tandis que les articulations 23 et 24 sont reliées entre elles et séparées par une liaison 26. En outre, pour chaque bras articulé 20, 21, les axes de rotation respectifs d'articulations 22, 23, 24 adjacentes ne sont pas parallèles pour chacune des deux paires d'articulations adjacentes. Ainsi, les axes de rotation des articulations 22 et 23 ne sont pas parallèles entre eux, et les axes de rotation des articulations 23 et 24 ne sont pas parallèles entre eux.

Pour contrôler la direction de poussée et le point d'application de la force de poussée, le dispositif de commande contrôle les angles de rotation des articulations 22, 23, 24, désignés respectivement par $\theta 1$, $\theta 2$ et $\theta 3$.

De tels bras articulés 20, 21 à trois degrés de liberté permettent de contrôler tous les paramètres orbitaux de l'orbite du satellite 10 et de désaturer suivant 3-axes le dispositif de stockage de moment cinétique, sans qu'il soit nécessaire d'équiper le satellite 10 d'autres propulseurs que ceux des unités de propulsion 30, 31 pour effectuer le contrôle d'orbite et la désaturation. De tels bras articulés 20, 21 peuvent également être mis en œuvre pour réaliser la mise à poste du satellite 10 sur son orbite de mission, en orientant les unités de propulsion 30, 31 de sorte à former des forces de poussée ayant des composantes importantes suivant l'axe Z.

Dans le cas d'un satellite 10 tel qu'illustré par la figure 2, c'est-à-dire comportant deux bras articulés 20, 21, le dispositif de commande peut par exemple contrôler l'orbite du satellite 10 et la désaturation du dispositif de stockage de moment cinétique en mettant en œuvre un mode de contrôle dit « à deux bras » en ce qu'il utilise les deux bras articulés 20, 21 (et les deux unités de propulsion 30, 31).

Le mode de contrôle à deux bras, qui sort du cadre de la présente invention, est par exemple conforme à ce qui est proposé dans le document EP 3157815 A1, et utilise par exemple le bras articulé 20 (du côté de la face Sud) pour réaliser une manœuvre de poussée au voisinage du nœud descendant de l'orbite du satellite 10, et le bras articulé 21 (du côté de la face Nord) pour réaliser une manœuvre de poussée au voisinage du nœud ascendant de ladite orbite dudit satellite 10.

La présente invention concerne plus particulièrement un mode de contrôle dit « mono-bras » en ce que le dispositif de commande utilise un seul bras articulé pour contrôler l'orbite du satellite 10 et pour désaturer le dispositif de stockage de moment cinétique dudit satellite 10.

Dans le cas du satellite 10 illustré par la figure 2, c'est-à-dire comportant deux bras articulés 20, 21, il est par exemple possible d'utiliser soit le mode de contrôle à deux bras soit le mode de contrôle mono-bras. Par exemple, le mode de contrôle à deux bras peut être utilisé par défaut, tandis que le mode de contrôle mono-bras peut être utilisé lorsqu'un critère prédéterminé de changement de mode de contrôle est vérifié. Par exemple, le critère de changement de mode de contrôle peut être considéré comme vérifié lorsqu'une panne définitive ou temporaire est détectée sur un bras articulé 20, 21. Le cas échéant, le mode de contrôle mono-bras est mis en œuvre en utilisant l'autre bras articulé 21, 20 qui est toujours opérationnel.

Il est cependant à noter que, dans d'autres exemples, le mode de contrôle mono-bras peut également être utilisé par défaut. Par exemple, dans le cas d'un satellite 10 comportant un seul bras articulé, le mode de contrôle à deux bras n'est évidemment pas disponible, et seul le mode de contrôle mono-bras est mis en œuvre pour contrôler l'orbite du satellite 10 et pour désaturer le dispositif de stockage de moment cinétique du satellite 10.

Dans le mode de contrôle mono-bras, le contrôle d'orbite du satellite 10 et la désaturation du dispositif de stockage de moment cinétique sont réalisés, au niveau du dispositif de commande, en commandant un seul des bras articulés 20, 21, et l'unité de propulsion 30, 31 portée par ce bras articulé, selon un plan de manœuvre comportant des manœuvres de poussée au cours desquelles l'unité de propulsion est activée pour former une force de poussée.

Dans le mode de contrôle mono-bras, le plan de manœuvre comporte uniquement des manœuvres de poussée qui sont exécutées lorsque le satellite 10 est situé dans une plage angulaire d'au plus 180° centrée sur un nœud prédéterminé de l'orbite du satellite 10, dit « nœud cible ».

En pratique, le nœud cible est déterminé par le volume de débattement du bras articulé 20, 21 utilisé. Par exemple, si le mode de contrôle mono-bras utilise le bras articulé 20 (positionné du côté de la face Sud), alors le nœud cible correspond au nœud descendant de l'orbite. En effet, le bras articulé 20 peut former des forces de poussée qui poussent le satellite vers le Nord, qui sont utiles au niveau du nœud descendant, lorsque le satellite 10 passe de l'hémisphère Nord vers l'hémisphère Sud. A contrario, si le mode de contrôle mono-bras utilise le bras articulé 21 (positionné du côté de la face Nord), alors le nœud cible correspond au nœud ascendant de l'orbite. En effet, le bras articulé 21 peut former des forces de poussée qui poussent le satellite vers le Sud, qui sont utiles au niveau du nœud ascendant, lorsque le satellite 10 passe de l'hémisphère Sud vers l'hémisphère Nord.

Ainsi, toutes les manœuvres de poussée du plan de manœuvre du mode de contrôle mono-bras sont exécutées dans une plage angulaire d'au plus 180° centrée sur le nœud cible, c'est-à-dire une plage angulaire comprise entre au plus 90° en amont du nœud cible et 90° en aval dudit nœud cible.

En outre, le plan de manœuvre comporte au moins une manœuvre de poussée qui est exécutée en amont dudit nœud cible, dite manœuvre de poussée amont », et une manœuvre de poussée qui est exécutée en aval dudit nœud cible, dite « manœuvre de poussée aval », pour avoir des manœuvres de poussée plus efficaces d'un point de vue consommation en ergol. Ainsi, il est plus aisé d'avoir des manœuvres de poussée espacées de manière importante (par exemple espacées d'au moins 20°), permettant ainsi notamment d'avoir une meilleure capacité de désaturation 3-axes, tout en conservant des manœuvres de poussée relativement proches du nœud cible, là où le contrôle N/S (qui est le plus demandeur en ergols) est le plus efficace.

Ainsi, le dispositif de commande contrôle l'orbite du satellite 10 et la désaturation du dispositif de stockage de moment cinétique en fonction du plan de manœuvre déterminé pour le mode de contrôle mono-bras.

Le dispositif de commande comporte par exemple au moins un processeur et au moins une mémoire électronique dans laquelle est mémorisé un produit programme d'ordinateur, sous la forme d'un ensemble d'instructions de code de programme à exécuter pour commander le bras articulé 20 ou 21 et l'unité de propulsion 30 ou 31 qu'il porte selon un tel plan de manœuvre. Dans une variante, le dispositif de commande comporte un ou des circuits logiques programmables, de type FPGA, PLD, etc., et/ou circuits intégrés spécialisés (ASIC) adaptés à mettre en œuvre tout ou partie desdites étapes de commande dudit bras articulé et de l'unité de propulsion qu'il porte selon un tel plan de manœuvre. En d'autres termes, le dispositif de commande comporte un ensemble de moyens configurés de façon logicielle (produit programme d'ordinateur spécifique) et/ou matérielle (FPGA, PLD, ASIC, etc.) pour commander le bras articulé 20 ou 21, et l'unité de propulsion 30 ou 31 qu'il porte selon le plan de manœuvre du mode de contrôle mono-bras.

Dans la suite de la description, on se place de manière non limitative dans le cas où c'est le bras articulé 21 qui est contrôlé par le dispositif de commande en utilisant le mode de contrôle mono-bras, par exemple du fait d'une défaillance du bras articulé 20. Par conséquent, le nœud cible du plan de manœuvre correspond au nœud ascendant de l'orbite du satellite 10, et toutes les manœuvres de poussée du plan de manœuvre sont exécutées dans une plage angulaire d'au plus 180° centrée sur le nœud ascendant, s'étendant au plus depuis 90° en amont dudit nœud ascendant jusqu'à 90° en aval dudit nœud ascendant. Il est à noter que seule la plage angulaire des positions possibles du satellite 10 par rapport au nœud ascendant (nœud cible) est imposée, les manœuvres de poussée peuvent être exécutées au cours d'une même période orbitale et/ou au cours de périodes orbitales différentes.

Les principaux paramètres à ajuster du plan de manœuvre sont par exemple :

- les dates de début des différentes manœuvres de poussée, c'est-à-dire les dates d'activation de l'unité de propulsion 31 ; les dates de début doivent permettre de réaliser les manœuvres de poussée à l'intérieur de la plage angulaire susmentionnée d'au plus 180° centrée autour du nœud cible, qui est le nœud ascendant dans l'exemple considéré, dont une manœuvre de poussée amont et une manœuvre de poussée aval,

- les durées des différentes manœuvres de poussée, c'est-à-dire les durées d'activation de l'unité de propulsion 31,
- les directions de poussée et les points d'application par rapport au centre de masse O du satellite 10 des forces de poussée respectives des différentes manœuvres de poussée.

Dans la suite de la description, on se place de manière non limitative dans le cas où la direction de poussée et le point d'application de chaque force de poussée du plan de manœuvre sont fixes en repère satellite pendant toute la durée de la manœuvre de poussée correspondante. En d'autres termes, les valeurs des angles $\theta1$, $\theta2$ et $\theta3$ des articulations 22, 23, 24 du bras articulé 21 ne sont pas modifiées au cours d'une même manœuvre de poussée. Rien n'exclut cependant, suivant d'autres exemples, de faire varier lesdites valeurs des angles $\theta1$, $\theta2$ et $\theta3$, afin d'augmenter le nombre de degrés de liberté pour le contrôle d'orbite et la désaturation.

Il est également possible d'ajuster d'autres paramètres tels que les normes de poussée des forces de poussée respectives desdites différentes manœuvres de poussée (dans le cas d'une unité de propulsion 31 dont la norme de poussée peut être contrôlée, par exemple par modulation ON/OFF).

Dans la suite de la description, on considère que le plan de manœuvre comporte exactement deux manœuvres de poussée, soit exactement une manœuvre de poussée amont et une manœuvre de poussée aval. On désigne par F1 la force de poussée de l'unité de propulsion 31 au cours de la première des deux manœuvres de poussée, qui débute à une date T1, et par F2 la force de poussée de l'unité de propulsion 31 au cours de la seconde des deux manœuvres de poussée, qui débute à une date T2. Les forces de poussée F1 et F2 s'expriment dans le repère satellite selon les expressions suivantes :

$$F1 = F1x \cdot ux(T1) + F1y \cdot uy(T1) + F1z \cdot uz(T1)$$

$$F2 = F2x \cdot ux(T2) + F2y \cdot uy(T2) + F2z \cdot uz(T2)$$

expressions dans lesquelles :

- (F1x, F1y, F1z) sont les composantes de la force de poussée F1 dans le repère satellite à la date T1, dont les vecteurs unitaires sont (ux(T1), uy(T1), uz(T1)),
- (F2x, F2y, F2z) sont les composantes de la force de poussée F2 dans le repère satellite à la date T2, dont les vecteurs unitaires sont (ux(T2), uy(T2), uz(T2)).

Si l'on se place dans le cas où le plan de manœuvre vise à contrôler tous les paramètres orbitaux (inclinaison, longitude, excentricité) de l'orbite du satellite 10 et à désaturer suivant 3 axes le dispositif de stockage de moment cinétique dudit satellite 10, alors le système d'équations à résoudre comporte neuf équations, relatives aux paramètres suivants :

- $\Delta Vx(T1)$ et $\Delta Vx(T2)$, des paramètres scalaires qui correspondent aux besoins en termes de variation de vitesse requise suivant l'axe X (contrôle E/O), aux cours de la première manœuvre de poussée et de la seconde manœuvre de poussée,
- $\Delta Vy(T1)$ et $\Delta Vy(T2)$, des paramètres scalaires qui correspondent aux besoins en termes de variation de vitesse requise suivant l'axe Y (contrôle N/S), aux cours de la première manœuvre de poussée et de la seconde manœuvre de poussée,
- $\Delta Vz(T1)$ et $\Delta Vz(T2)$, des paramètres scalaires qui correspondent aux besoins en termes de variation de vitesse requise suivant l'axe Z (contrôle excentricité), aux cours de la première manœuvre de poussée et de la seconde manœuvre de poussée,
- $\Delta H$, un vecteur de trois paramètres scalaires correspondant aux composantes du moment cinétique à déstocker du dispositif de stockage de moment cinétique à l'issue de la première manœuvre de poussée et de la seconde manœuvre de poussée, exprimé en repère inertiel.

En ajustant les durées et les dates des deux manœuvres de poussée et les valeurs des angles $\theta1(T1)$, $\theta2(T1)$, $\theta3(T1)$, $\theta1(T2)$, $\theta2(T2)$ et $\theta3(T2)$ des articulations 22, 23, 24 des bras articulés 20, 21 au cours desdites deux manœuvres de poussée, on dispose alors d'un nombre suffisant de degrés de liberté pour résoudre le système d'équations susmentionné.

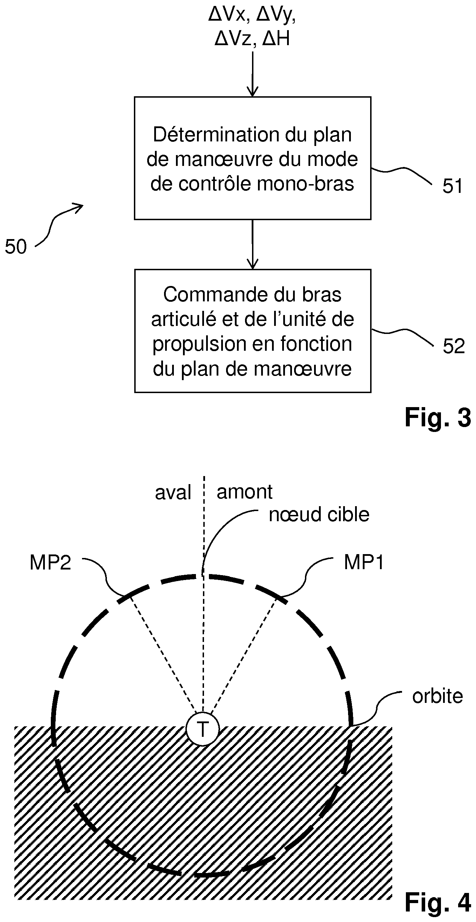

La figure 3 représente schématiquement les principales étapes d'un procédé 50 de contrôle de l'orbite du satellite 10 et de désaturation d'un dispositif de stockage de moment cinétique dudit satellite.

Tel qu'illustré par la figure 3, le procédé 50 de contrôle d'orbite et de désaturation comporte notamment une étape 51 de détermination d'un plan de manœuvre pour le mode de contrôle mono-bras, défini sur une ou plusieurs périodes orbitales. Le plan de manœuvre comporte uniquement des manœuvres de poussée à exécuter dans une plage angulaire d'au plus 180° centrée sur le nœud cible de l'orbite, et comporte au moins une manœuvre de poussée amont et au moins une manœuvre de poussée aval.

Les manœuvres de poussée du plan de manœuvre sont déterminées en fonction de besoins prédéterminés de contrôle d'inclinaison ($\Delta Vy$), de contrôle de longitude ($\Delta Vx$) et de contrôle d'excentricité ($\Delta Vz$) de l'orbite du satellite 10, et en fonction d'un besoin prédéterminé de désaturation ($\Delta H$) du dispositif de stockage de moment cinétique dudit satellite 10.

Afin de pouvoir désaturer le dispositif de stockage de moment cinétique quelle que soit la direction du moment cinétique stocké, le plan de manœuvre peut comporter deux manœuvres de poussée dont les forces de poussée respectives sont de directions de poussée non parallèles en repère inertiel. Ainsi, au cours desdites deux manœuvres de poussée, les plans dans lesquels il est possible de former un moment de désaturation ne sont pas parallèles de sorte que, sur l'ensemble des deux manœuvres de poussée, l'espace vectoriel dans lequel il est possible de former un moment de désaturation est de dimension trois. En pratique, la manœuvre de poussée amont et la manœuvre de poussée aval pourront avoir des forces de poussée de directions de poussée non parallèles en repère inertiel. Plus les manœuvres de poussée amont et aval sont espacées à l'intérieur de la plage angulaire d'au plus 180° centrée sur le nœud ascendant, et plus la capacité de désaturation 3-axes sera importante.

Une fois que le plan de manœuvre du mode de contrôle mono-bras est déterminé, le procédé 50 de contrôle d'orbite et de désaturation comporte une étape 52 de commande du bras articulé 21, et de l'unité de propulsion 31 portée par ledit bras articulé, en fonction du plan de manœuvre.

Tel qu'indiqué précédemment, l'étape 52 de commande est mise en œuvre par le dispositif de commande embarqué dans le satellite 10.

L'étape 51 de détermination du plan de manœuvre peut être exécutée au niveau du satellite 10 par le dispositif de commande embarqué dans ledit satellite 10, ou au sol par une station terrestre d'un système satellitaire. Dans le cas où le plan de manœuvre est déterminé par une station terrestre, ledit plan de manœuvre est transmis au satellite 10 pour être mis en œuvre par le dispositif de commande. Le plan de manœuvre peut également, suivant d'autres exemples, être déterminé conjointement par le satellite 10 et la station terrestre.

La station terrestre comporte par exemple au moins un processeur et au moins une mémoire électronique dans laquelle est mémorisé un produit programme d'ordinateur, sous la forme d'un ensemble d'instructions de code de programme à exécuter pour déterminer le plan de manœuvre. Dans une variante, la station terrestre comporte un ou des circuits logiques programmables, de type FPGA, PLD, etc., et/ou circuits intégrés spécialisés (ASIC) adaptés à déterminer le plan de manœuvre. En d'autres termes, la station terrestre comporte un ensemble de moyens configurés de façon logicielle (produit programme d'ordinateur spécifique) et/ou matérielle (FPGA, PLD, ASIC, etc.) pour mettre en œuvre les différentes opérations permettant de déterminer le plan de manœuvre.

Les figures 4 à 6 représentent schématiquement des exemples de plans de manœuvre. Les figures 4 à 6 représentent l'orbite du satellite 10, autour de la Terre T, ainsi que le nœud cible. Sur les figures 4 à 6, les zones hachurées correspondent aux parties de l'orbite qui sont exclues pour l'exécution de manœuvres de poussée, c'est-à-dire les parties de l'orbite qui se trouvent en dehors d'une plage angulaire de 180° centrée sur le nœud cible.

La figure 4 représente schématiquement un exemple de plan de manœuvre qui est défini sur une seule période orbitale. Tel qu'illustré par la figure 4, le plan de manœuvre comporte une manœuvre de poussée MP1 exécutée en amont du nœud cible et une manœuvre de poussée MP2 exécutée en aval dudit nœud cible, exécutées au cours d'une même demi-période orbitale.

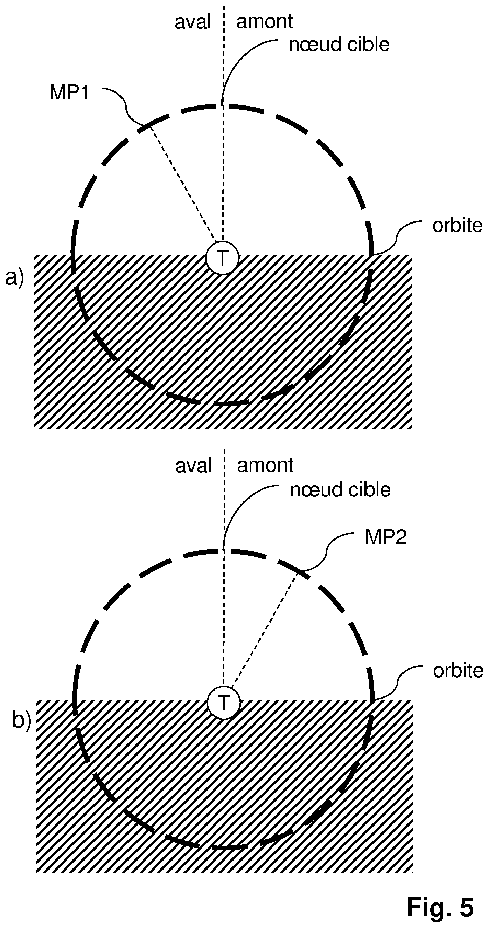

La figure 5 représente schématiquement un exemple de plan de manœuvre qui est défini sur deux périodes orbitales successives. Plus particulièrement, la partie a) de la figure 5 représente la première période orbitale du plan de manœuvre et la partie b) de la figure 5 représente la seconde période orbitale du plan de manœuvre. Tel qu'illustré par la partie a) de la figure 5, le plan de manœuvre comporte uniquement, lors de la première période orbitale, une manœuvre de poussée MP1 exécutée en aval du nœud cible. Tel qu'illustré par la partie b) de la figure 5, le plan de manœuvre comporte uniquement, lors de la seconde période orbitale, une manœuvre de poussée MP2 exécutée en amont du nœud cible.

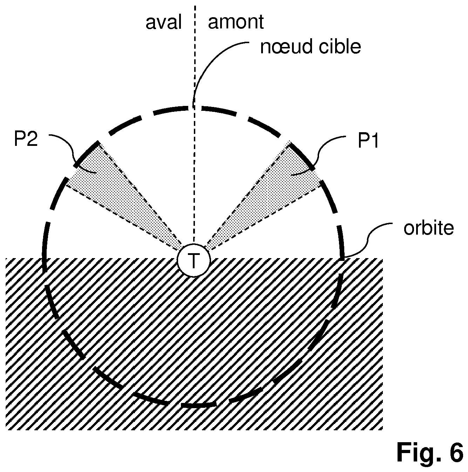

La figure 6 représente schématiquement un mode préféré de mise en œuvre d'un plan de manœuvre. Dans ce mode de mise en œuvre, la manœuvre de poussée amont est exécutée au moins en partie lorsque le satellite 10 est situé dans une plage angulaire P1 comprise entre 40° et 60° en amont du nœud cible, et la manœuvre de poussée aval est exécutée au moins en partie lorsque le satellite 10 est situé dans une plage angulaire P2 comprise entre 40° et 60° en aval du nœud cible. Par exemple, la manœuvre de poussée amont est débutée lorsque le satellite 10 est situé dans la plage angulaire P1 (et est achevée avant ou après que le satellite 10 ne sorte de ladite plage angulaire P1), et la manœuvre de poussée aval est débutée lorsque le satellite 10 est situé dans la plage angulaire P2 (et est achevée avant ou après que le satellite 10 ne sorte de ladite plage angulaire P2). La manœuvre de poussée amont et la manœuvre de poussée aval peuvent être exécutées au cours de la même demi-période orbitale, ou au cours de différentes périodes orbitales. De préférence, chacune des manœuvres de poussée du plan de manœuvre est exécutée lorsque le satellite 10 se trouve dans l'une des plages angulaires P1 et P2. De telles dispositions permettent de limiter les déplacements du bras articulé entre deux manœuvres de poussée, tout en limitant la surconsommation d'ergols liée au fait que les manœuvres de poussée ne sont pas exécutées à proximité immédiate du nœud cible, en particulier lorsqu'une manœuvre de poussée amont et une manœuvre de poussée aval sont exécutées au cours d'une même demi-période orbitale.

Il est à noter que les exemples représentés par les figures 4 à 6 ne sont pas limitatifs, et d'autres plans de manœuvre sont envisageables. De préférence, lorsque le plan de manœuvre est défini sur plusieurs périodes orbitales, celui-ci comporte au moins une manœuvre de poussée par période orbitale. Il est à noter que le nombre de manœuvres de poussée par période orbitale peut varier d'une période orbitale à une autre. Par exemple, le plan de manœuvre peut comporter une manœuvre de poussée au cours d'une première période orbitale, puis deux manœuvres de poussée au cours d'une seconde période orbitale, etc. En outre, il est à noter que les manœuvres de poussée ne sont pas nécessairement agencées de manière symétrique par rapport au nœud cible. Par exemple, le plan de manœuvre peut comporter une manœuvre de poussée amont exécutée 40° en amont du nœud cible et une manœuvre de poussée aval exécutée 55° en aval du nœud cible, etc.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement un satellite 10 comportant deux bras articulés 20, 21 comportant chacun trois articulations. Rien n'exclut cependant, suivant d'autres exemples, de considérer un satellite 10 comportant un nombre différent de bras articulés, inférieur ou supérieur à deux, et comportant un nombre d'articulations et/ou de degrés de liberté supérieur à trois.

## Revendications

1. Procédé (50) de contrôle d'orbite d'un satellite (10) en orbite terrestre et de désaturation d'un dispositif de stockage de moment cinétique dudit satellite, ledit satellite (10) comportant un bras articulé (21) comportant au moins trois degrés de liberté, ledit bras articulé comportant une première extrémité liée à un corps (11) du satellite (10) et une seconde extrémité portant une unité de propulsion (31), ledit bras articulé étant adapté à déplacer ladite seconde extrémité dans un volume de débattement inclus dans un demi-espace délimité par un plan d'orbite du satellite (10) lorsque ledit satellite est dans une attitude de mission, ledit procédé (50) comportant un mode de contrôle dit mono-bras en ce qu'il utilise uniquement l'unité de propulsion (31) portée par le bras articulé (21) pour contrôler l'orbite du satellite (10) et pour désaturer le dispositif de stockage, **caractérisé en ce que** ledit mode de contrôle mono-bras utilise un plan de manœuvre comportant uniquement des manœuvres de poussée à exécuter lorsque le satellite (10) est situé dans une plage angulaire d'au plus 180° centrée sur un nœud prédéterminé parmi le nœud ascendant et le nœud descendant de l'orbite du satellite (10), dit nœud cible, ledit plan de manœuvre comportant au moins une manœuvre de poussée dite amont à exécuter en amont dudit nœud cible et une manœuvre de poussée dite aval à exécuter en aval dudit nœud cible, la manœuvre de poussée amont étant exécutée au moins en partie lorsque le satellite (10) est situé dans une plage angulaire comprise entre 40° et 60° en amont du nœud cible, et la manœuvre de poussée aval étant exécutée au moins en partie lorsque le satellite (10) est situé dans une plage angulaire comprise entre 40° et 60° en aval du nœud cible.

2. Procédé (50) selon la revendication 1, chaque manœuvre de poussée du plan de manœuvre est exécutée au moins en partie lorsque le satellite (10) se trouve dans la plage angulaire comprise entre 40° et 60° en amont du nœud cible ou dans la plage angulaire comprise entre 40° et 60° en aval du nœud cible.

3. Procédé (50) selon l'une quelconque des revendications précédentes, dans lequel le plan de manœuvre comporte au moins une manœuvre de poussée par période orbitale.

4. Procédé (50) selon l'une quelconque des revendications précédentes, dans lequel la manœuvre de poussée amont et la manœuvre de poussée aval sont exécutées au cours d'une même demi-période orbitale.

5. Procédé (50) selon l'une quelconque des revendications précédentes, dans lequel la manœuvre de poussée amont et la manœuvre de poussée aval ont des forces de poussée de l'unité de propulsion (31) de directions de poussée respectives non parallèles en repère inertiel, lesdites forces de poussée étant déterminées pour former des moments dans des plans respectifs non parallèles en repère inertiel et réaliser une désaturation 3-axes dudit dispositif de stockage de moment cinétique.

6. Procédé (50) selon l'une quelconque des revendications précédentes, dans lequel la manœuvre de poussée amont et la manœuvre de poussée aval ont des forces de poussée de l'unité de propulsion (31) déterminées pour contrôler au moins l'inclinaison de l'orbite du satellite (10).

7. Procédé (50) selon la revendication 6, dans lequel la manœuvre de poussée amont et la manœuvre de poussée aval ont des forces de poussée de l'unité de propulsion (30, 31) déterminées pour contrôler en outre au moins un paramètre orbital parmi la longitude et l'excentricité de l'orbite du satellite (10).

8. Procédé (50) selon l'une quelconque des revendications précédentes, dans lequel, le bras articulé (21) comportant au moins trois articulations (22, 23, 24) comportant chacune au moins un degré de liberté en rotation autour d'un axe de rotation, une première articulation (22) et une seconde articulation (23) étant séparées par une première liaison (25) et étant d'axes de rotation respectifs non parallèles, la seconde articulation (23) et une troisième articulation (24) étant séparées par une seconde liaison (26) et étant d'axes de rotation respectifs non parallèles, le bras articulé (21) est contrôlé pour réaliser une manœuvre de poussée en commandant lesdites articulations dudit bras articulé.

9. Procédé (50) selon l'une quelconque des revendications précédentes, dans lequel, le satellite (10) comportant deux bras articulés (20, 21) comportant chacun au moins trois degrés de liberté et portant chacun une unité de propulsion (30, 31), lesdits deux bras articulés (20, 21) étant adaptés à déplacer les unités de propulsion (30, 31) dans des volumes de débattement respectifs inclus dans des demi-espaces respectifs opposés par rapport au plan d'orbite du satellite (10) lorsque ledit satellite est dans l'attitude de mission, ledit procédé (50) comporte en outre un mode de contrôle dit à deux bras en ce qu'il utilise les deux bras articulés (20, 21) :

   - le mode de contrôle à deux bras est utilisé tant qu'un critère de changement de mode de contrôle n'est pas vérifié,
   - le mode de contrôle mono-bras est utilisé lorsque le critère de changement de mode de contrôle est vérifié.

10. Procédé (50) selon la revendication 9, dans lequel le critère de changement de mode de contrôle est vérifié lorsqu'une panne d'un bras articulé est détectée.

11. Satellite (10) destiné à être placé en orbite terrestre, comportant un bras articulé (21) comportant au moins trois degrés de liberté, ledit bras articulé comportant une première extrémité liée à un corps (11) du satellite (10) et une seconde extrémité portant une unité de propulsion (31), ledit bras articulé étant adapté à déplacer ladite seconde extrémité dans un volume de débattement inclus dans un demi-espace délimité par un plan d'orbite du satellite (10) lorsque ledit satellite est dans une attitude de mission, **caractérisé en ce que** ledit satellite comporte un dispositif de commande configuré pour commander le bras articulé et l'unité de propulsion selon un plan de manœuvre d'un mode de contrôle mono-bras d'un procédé (50) de contrôle d'orbite et de désaturation selon l'une quelconque des revendications précédentes.

12. Satellite (10) selon la revendication 11, dans lequel le bras articulé (21) comporte au moins trois articulations (22, 23, 24) comportant chacune au moins un degré de liberté en rotation autour d'un axe de rotation, une première articulation (22) et une seconde articulation (23) étant séparées par une première liaison (25) et étant d'axes de rotation respectifs non parallèles, la seconde articulation (23) et une troisième articulation (24) étant séparées par une seconde liaison (26) et étant d'axes de rotation respectifs non parallèles.

13. Satellite (10) selon la revendication 11 ou 12, comportant uniquement des propulseurs électriques.

14. Système satellitaire comportant une station terrestre et un satellite (10) en orbite terrestre selon l'une quelconque des revendications 11 à 13, dans lequel le plan de manœuvre du mode de contrôle mono-bras est déterminé par le dispositif de commande et/ou par la station terrestre.

15. Système satellitaire selon la revendication 14, dans lequel le satellite (10) est en orbite géostationnaire.


**Patentansprüche**

1. Verfahren (50) zur Umlaufbahnsteuerung eines Satelliten (10) in einer Erdumlaufbahn und zur Entsättigung einer Drallspeichervorrichtung des Satelliten, wobei der Satellit (10) einen Gelenkarm (21) mit wenigstens drei Freiheitsgraden aufweist, wobei der Gelenkarm ein erstes Ende, das mit einem Körper (11) des Satelliten (10) verbunden ist, und ein zweites Ende, das eine Antriebseinheit (31) trägt, aufweist, wobei der Gelenkarm dazu eingerichtet ist, das zweite Ende in einem Auslenkungsvolumen zu verlagern, das in einem Halbraum enthalten ist, der von einer Umlaufbahnebene des Satelliten (10) begrenzt wird, wenn sich der Satellit in einer Einsatzstellung befindet, wobei das Verfahren (50) einen Steuerungsmodus aufweist, der einarmig genannt wird, insofern als er ausschließlich die von dem Gelenkarm (21) getragene Antriebseinheit (31) verwendet, um die Umlaufbahn des Satelliten (10) zu steuern und um die Speichervorrichtung zu entsättigen,
**dadurch gekennzeichnet, dass** der einarmige Steuerungsmodus einen Manövrierplan verwendet, der ausschließlich Schubmanöver aufweist, die auszuführen sind, wenn sich der Satellit (10) in einem Winkelbereich von höchstens 180° befindet, der auf einem vorbestimmten Knoten von dem aufsteigenden Knoten und dem absteigenden Knoten der Umlaufbahn des Satelliten (10) zentriert ist, Zielknoten genannt, wobei der Manövrierplan wenigstens ein sogenanntes vorgeschaltetes Schubmanöver, das vor dem Zielknoten auszuführen ist, und ein sogenanntes nachgeschaltetes Schubmanöver, das nach dem Zielknoten auszuführen ist, aufweist, wobei das vorgeschaltete Schubmanöver wenigstens teilweise ausgeführt wird, wenn sich der Satellit (10) in einem Winkelbereich befindet, der zwischen 40° und 60° vor dem Zielknoten liegt, und das nachgeschaltete Schubmanöver wenigstens teilweise ausgeführt wird, wenn sich der Satellit (10) in einem Winkelbereich befindet, der zwischen 40° und 60° hinter dem Zielknoten liegt.

2. Verfahren (50) nach Anspruch 1, wobei jedes Schubmanöver des Manövrierplans wenigstens teilweise ausgeführt wird, wenn sich der Satellit (10) in dem Winkelbereich befindet, der zwischen 40° und 60° vor dem Zielknoten liegt, oder in dem Winkelbereich, der zwischen 40° und 60° hinter dem Zielknoten liegt.

3. Verfahren (50) nach einem der vorhergehenden Ansprüche, wobei der Manövrierplan wenigstens ein Schubmanöver pro Umlaufzeit aufweist.

4. Verfahren (50) nach einem der vorhergehenden Ansprüche, wobei das vorgeschaltete Schubmanöver und das nachgeschaltete Schubmanöver im Verlauf derselben Halbumlaufzeit ausgeführt werden.

5. Verfahren (50) nach einem der vorhergehenden Ansprüche, wobei das vorgeschaltete Schubmanöver und das nachgeschaltete Schubmanöver Schubkräfte der Antriebseinheit (31) mit jeweiligen Schubrichtungen aufweisen, die in einem Inertialkoordinatensystem nicht parallel sind, wobei diese Schubkräfte bestimmt werden, um Momente in den jeweiligen nicht parallelen Ebenen im Inertialkoordinatensystem zu bilden und eine auf 3 Achsen bezogene Entsättigung der Drallspeichervorrichtung durchzuführen.

6. Verfahren (50) nach einem der vorhergehenden Ansprüche, wobei das vorgeschaltete Schubmanöver und das nachgeschaltete Schubmanöver Schubkräfte der Antriebseinheit (31) aufweisen, die bestimmt werden, um wenigstens die Neigung der Umlaufbahn des Satelliten (10) zu steuern.

7. Verfahren (50) nach Anspruch 6, wobei das vorgeschaltete Schubmanöver und das nachgeschaltete Schubmanöver Schubkräfte der Antriebseinheit (30, 31) aufweisen, die bestimmt werden, um außerdem wenigstens einen Umlaufbahnparameter von der geografischen Länge und der Exzentrizität der Umlaufbahn des Satelliten (10) zu steuern.

8. Verfahren (50) nach einem der vorhergehenden Ansprüche, wobei, wenn der Gelenkarm (21) wenigstens drei Gelenke (22, 23, 24) aufweist, die jeweils wenigstens einen Rotationsfreiheitsgrad um eine Drehachse aufweisen, wobei ein erstes Gelenk (22) und ein zweites Gelenk (23) durch eine erste Verbindung (25) getrennt sind und jeweilige Drehachsen aufweisen, die nicht parallel sind, wobei das zweite Gelenk (23) und ein drittes Gelenk (24) durch eine zweite Verbindung (26) getrennt sind und jeweilige Drehachsen aufweisen, die nicht parallel sind, der Gelenkarm (21) gesteuert wird, um ein Schubmanöver durchzuführen, indem die Gelenke des Gelenkarmes gesteuert werden.

9. Verfahren (50) nach einem der vorhergehenden Ansprüche, wobei, wenn der Satellit (10) zwei Gelenkarme (20, 21) aufweist, die jeweils wenigstens drei Freiheitsgrade aufweisen und jeweils eine Antriebseinheit (30, 31) tragen, wobei die zwei Gelenkarme (20, 21) dazu eingerichtet sind, die Antriebseinheiten (30, 31) in jeweiligen Auslenkungsvolumina zu verlagern, die in jeweiligen Halbräumen enthalten sind, die in Bezug auf die Umlaufbahnebene des Satelliten (10) einander gegenüberliegen, wenn sich der Satellit in der Einsatzstellung befindet, das Verfahren (50) außerdem einen Steuerungsmodus aufweist, der zweiarmig genannt wird, insofern als er die zwei Gelenkarme (20, 21) verwendet:

- wobei der zweiarmige Steuerungsmodus verwendet wird, solange ein Kriterium der Änderung des Steuerungsmodus nicht erfüllt ist,

- wobei der einarmige Steuerungsmodus verwendet wird, wenn das Kriterium der Änderung des Steuerungsmodus erfüllt ist.

10. Verfahren (50) nach Anspruch 9, wobei das Kriterium der Änderung des Steuerungsmodus erfüllt ist, wenn eine Störung eines Gelenkarmes erkannt wird.

11. Satellit (10), welcher dazu bestimmt ist, in eine Erdumlaufbahn gebracht zu werden, und einen Gelenkarm (21) mit wenigstens drei Freiheitsgraden aufweist, wobei der Gelenkarm ein erstes Ende, das mit einem Körper (11) des Satelliten (10) verbunden ist, und ein zweites Ende, das eine Antriebseinheit (31) trägt, aufweist, wobei der Gelenkarm dazu eingerichtet ist, das zweite Ende in einem Auslenkungsvolumen zu verlagern, das in einem Halbraum enthalten ist, der von einer Umlaufbahnebene des Satelliten (10) begrenzt wird, wenn sich der Satellit in einer Einsatzstellung befindet,
**dadurch gekennzeichnet, dass** der Satellit eine Steuervorrichtung aufweist, die dafür ausgelegt ist, den Gelenkarm und die Antriebseinheit gemäß einem Manövrierplan eines einarmigen Steuerungsmodus eines Verfahrens (50) zur Umlaufbahnsteuerung und zur Entsättigung nach einem der vorhergehenden Ansprüche zu steuern.

12. Satellit (10) nach Anspruch 11, wobei der Gelenkarm (21) wenigstens drei Gelenke (22, 23, 24) aufweist, die jeweils wenigstens einen Rotationsfreiheitsgrad um eine Drehachse aufweisen, wobei ein erstes Gelenk (22) und ein zweites Gelenk (23) durch eine erste Verbindung (25) getrennt sind und jeweilige Drehachsen aufweisen, die nicht parallel sind, wobei das zweite Gelenk (23) und ein drittes Gelenk (24) durch eine zweite Verbindung (26) getrennt sind und jeweilige Drehachsen aufweisen, die nicht parallel sind.

13. Satellit (10) nach Anspruch 11 oder 12, welcher ausschließlich elektrische Antriebe aufweist.

14. Satellitensystem, welches eine Bodenstation und einen Satelliten (10) in einer Erdumlaufbahn nach einem der Ansprüche 11 bis 13 aufweist, wobei der Manövrierplan des einarmigen Steuerungsmodus von der Steuervorrichtung und/oder von der Bodenstation bestimmt wird.

15. Satellitensystem nach Anspruch 14, wobei sich der Satellit (10) in einer geostationären Umlaufbahn befindet.

**Claims**

1. A method (50) for controlling an orbit of a satellite (10) in earth orbit and for unloading an angular momentum storage device of said satellite, said satellite (10) comprising an articulated arm (21) comprising at least three degrees of freedom, said articulated arm comprising a first end connected to a body (11) of the satellite (10) and a second end carrying a propulsion unit (31), said articulated arm being adapted to move said second end in a displacement volume included in a half-space demarcated by an orbit plane of the satellite (10) when said satellite is in a mission attitude, said method (50) comprising a control mode referred to as single-arm in that it uses only the propulsion unit (31) carried by the articulated arm (21) to control the orbit of the satellite (10) and to unload the storage device, **characterized in that** said single-arm control mode uses a maneuver plan comprising only thrust maneuvers to be performed when the satellite (10) is situated within an angular range of at most 180° centered on a predetermined node among the ascending node and the descending node of the orbit of the satellite (10), referred to as target node, said maneuver plan comprising at least one thrust maneuver referred to as upstream to be performed upstream of said target node, and one thrust maneuver referred to as downstream to be performed downstream of said target node, the upstream thrust maneuver being performed at least partly when the satellite (10) is situated within an angular range between 40° and 60° upstream of the target node, and the downstream thrust maneuver being performed at least partly when the satellite (10) is situated within an angular range between 40° and 60° downstream of the target node.

2. The method (50) according to claim 1, where each thrust maneuver of the maneuver plan is performed at least partly when the satellite (10) is situated within an angular range between 40° and 60° upstream of the target node, or within an angular range between 40° and 60° downstream of the target node.

3. The method (50) according to any of the previous claims, wherein the maneuver plan comprises at least one thrust maneuver per orbital period.

4. The method (50) according to any of the previous claims, wherein the upstream thrust maneuver and the downstream thrust maneuver are performed during the same orbital half-period.

5. The method (50) according to any of the previous claims, wherein the upstream thrust maneuver and the downstream thrust maneuver have propulsion unit (31) thrust forces with respective non-parallel thrust directions in an inertial frame, said thrust forces being determined to form torques in respective non-parallel planes in the inertial frame and to achieve a 3-axis unloading of said angular momentum storage device.

6. The method (50) according to any of the previous claims, wherein the upstream thrust maneuver and the downstream thrust maneuver have propulsion unit (31) thrust forces determined to control at least the inclination of the orbit of the satellite (10).

7. The method (50) according to claim 6, wherein the upstream thrust maneuver and the downstream thrust maneuver have propulsion unit (30, 31) thrust forces determined to additionally control at least one orbital parameter among the longitude and the eccentricity of the orbit of the satellite (10).

8. The method (50) according to any of the previous claims, wherein, the articulated arm (21) comprising at least three articulations (22, 23, 24), each comprising at least one degree of freedom in rotation around a rotational axis, a first articulation (22) and a second articulation (23) being separated by a first connection (25) and having non-parallel respective rotational axes, the second articulation (23) and a third articulation (24) being separated by a second link (26) and having non-parallel respective axes, wherein the articulated arm (21) is controlled in order to perform a thrust maneuver by controlling said articulations of said articulated arm.

9. The method (50) according to any of the previous claims, wherein, the satellite (10) comprising two articulated arms (20, 21), each comprising at least three degrees of freedom and each carrying a propulsion unit (30, 31), said two articulated arms (20, 21) being adapted to move the propulsion units (30, 31) in respective displacement volumes included in respective opposed half-spaces relative to the orbit plane of the satellite (10) when said satellite is in a mission attitude, said method (50) additionally comprising a control mode referred to as two-arm in that it uses the two articulated arms (20, 21):

   - The two-arm control mode is used as long as a criterion for changing the control mode has not been verified,
   - The single-arm control mode is used where the criterion for changing the control has been verified.

10. The method (50) according to claim 9, wherein the criterion for changing the control mode is verified when a fault is detected on an articulated arm.

11. A satellite (10) designed to be placed in earth orbit, comprising an articulated arm (21) comprising at least three degrees of freedom, said articulated arm comprising a first end connected to a body (11) of the satellite (10) and a second end carrying a propulsion unit (31), said articulated arm being adapted to move said second end in a displacement volume included in a half-space demarcated by an orbit plane of the satellite (10) when said satellite is in a mission attitude, **characterized in that** said satellite comprises a control device configured to control the articulated arm and the propulsion unit according to a maneuver plan of a single-arm control mode of a method (50) for orbit control and unload according to any of the previous claims.

12. The satellite (10) according to claim 11, wherein the articulated arm (21) comprises at least three articulations (22, 23, 24), each comprising at least a degree of freedom in rotation around a rotational axis, a first articulation (22) and a second articulation (23) being separated by a first link (25) and having non-parallel respective rotational axes, the second articulation (23) and a third articulation (24) being separated by a second link (26) and having non-parallel respective axes.

13. The satellite (10) according to claim 11 or 12, comprising only electric thrusters.

14. A satellite system comprising a ground station and a satellite (10) in earth orbit according to any of claims 11 to 13, wherein the maneuver plan of the single-arm control mode is determined by the control device and/or by the ground station.

15. The satellite system according to claim 14, wherein the satellite (10) is in geostationary orbit.

**Fig. 1**

**Fig. 2**

$\Delta Vx, \Delta Vy,$
$\Delta Vz, \Delta H$

Détermination du plan de manœuvre du mode de contrôle mono-bras — 51

50

Commande du bras articulé et de l'unité de propulsion en fonction du plan de manœuvre — 52

**Fig. 3**

aval ┊ amont

nœud cible

MP2

MP1

T

orbite

**Fig. 4**

**Fig. 5**

Fig. 6

**EP 3 956 230 B1**

## RÉFÉRENCES CITÉES DANS LA DESCRIPTION

**Documents brevets cités dans la description**

- EP 3157815 A1
- US 20130292516 A1